# EUROPÄISCHE PATENTANMELDUNG

(11) **EP 3 376 258 A1**
(43) Veröffentlichungstag der Anmeldung: **19.09.2018**
(21) Anmeldenummer: 18161935.4
(22) Anmeldetag: 15.03.2018
(51) Int. Cl.: G01S 19/41

(54) **REFERENZSTATION FÜR SATELLITENGESTÜTZTES NAVIGATIONSSYSTEM**

(30) Priorität: 16.03.2017 DE 102017204373
(71) Anmelder: Robert Bosch GmbH, 70442 Stuttgart (DE)
(72) Erfinder: Brenk, Achim, 75236 Kaempfelbach (DE); Koenig, Jens, 71706 Markgroeningen (DE); Schurr, Joachim, 73107 Eschenbach (DE)

(57) **Zusammenfassung**

Referenzstation (1) für ein satellitengestütztes Navigationssystem (2), umfassend mindestens einen Empfänger (11) für von Satelliten (21-24) des Navigationssystems ausgesendete Signale (21a-24a), ein Verarbeitungsmodul (12) zur Auswertung einer angeblichen Position (19) der Referenzstation aus den empfangenen Signalen (21a-24a), einen Speicher (13) für die tatsächliche Position (10) der Referenzstation, eine Vergleichseinheit (14), die dazu ausgebildet ist, aus der Differenz zwischen der angeblichen Position und der tatsächlichen Position der Referenzstation Korrekturbeiträge (21c-24c) zu ermitteln, die den Einfluss der Ionosphäre (3) auf die Laufzeit (21b-24b) der Signale zu beschreiben, sowie einen Sender (15a) zur Übermittlung der Korrekturbeiträge an mindestens eine mobile Einheit (4), wobei die Referenzstation ein Einmessmodul (16) aufweist, das dazu ausgebildet ist, in einem Einmesszeitraum, in dem die Elektronendichte (3a) in der Ionosphäre vermindert ist, aus einer oder mehreren angeblichen Positionen die tatsächliche Position der Referenzstation auszuwerten und in dem Speicher abzulegen.

## Beschreibung

Die vorliegende Erfindung betrifft eine Referenzstation für ein satellitengestütztes Navigationssystem, das die Genauigkeit und die Präzision der Positionsbestimmung in einen für die Lokalisierung von Objekten auf Baustellen relevanten Bereich steigert.

### Stand der Technik

Auf Baustellen ist es auf Grund beengter Platzverhältnisse nicht immer möglich, jedem Gegenstand einen festen Lagerplatz zuzuweisen. Bei häufig verwendeten Gegenständen, und insbesondere bei Verbrauchsmaterialien, ist eine kontinuierliche Buchführung, hinsichtlich der Verwendung sowie des Lagerortes, nicht praktikabel. Im Ergebnis wird auf Baustellen sehr viel Arbeitszeit damit verbracht, Gegenstände und Materialien zu suchen.

Die US 2014 240 143 A1 offenbart, die Position des Objekts mit Hilfe von globalen satellitengestützten Navigationssystemen, GNSS, zu bestimmen und die Positionsinformation mittels Sub-1GHz-Funksignalen zu versenden. Die damit erzielbare laterale Genauigkeit liegt zwischen 15 und 35 Metern, was zur Lokalisierung eines Objekts auf einer Baustelle nicht immer ausreicht.

Die US 2007/085 734 A1 offenbart eine portable Referenzstation, die ihren Standort anhand eines oder mehrerer zuvor eingespeicherter Standorte erkennt und dann Korrektursignale für ein Differential-GPS bereitstellt. Damit kann die Ungenauigkeit des GNSS symptomatisch behandelt werden.

Die US 6,397,147 B1 offenbart eine portable Referenzstation, die sich selbst auf eine Referenzposition kalibriert und den Einfluss sowohl der Troposphäre als auch der Ionosphäre auf die Signallaufzeiten mit Hilfe von Modellen korrigiert.

Weiterer Stand der Technik zur Verbesserung der Genauigkeit ist in der US 6,417,801 B1, in der US 6,266,009 B1, in der EP 3 032 279 A1, in der EP 0 826 980 B1 und in der DE 195 39 302 B4 angegeben.

### Offenbarung der Erfindung

Im Rahmen der Erfindung wurde eine Referenzstation für ein satellitengestütztes Navigationssystem entwickelt. Diese Referenzstation umfasst mindestens einen Empfänger für die von den Satelliten eines oder mehrerer Navigationssysteme ausgesendeten Signale, ein Verarbeitungsmodul zur Auswertung einer angeblichen Position der Referenzstation aus den empfangenen Signalen, einen Speicher für die tatsächliche Position der Referenzstation, eine Vergleichseinheit, die dazu ausgebildet ist, aus der Differenz zwischen der angeblichen Position und der tatsächlichen Position der Referenzstation Korrekturbeiträge zu ermitteln, die mindestens den Einfluss der Ionosphäre auf die Laufzeit der Signale zu beschreiben, sowie einen Sender zur Übermittlung der Korrekturbeiträge an mindestens eine mobile Einheit.

Erfindungsgemäß weist die Referenzstation ein Einmessmodul auf, das dazu ausgebildet ist, in einem Einmesszeitraum, in dem die Elektronendichte in der Ionosphäre vermindert ist, aus einer oder mehreren angeblichen Positionen die tatsächliche Position der Referenzstation auszuwerten und in dem Speicher abzulegen.

Damit die Genauigkeit der Positionsbestimmung mit der Referenzstation verbessert werden kann, muss grundsätzlich die tatsächliche Position der Referenzstation mit einer höheren Genauigkeit bekannt sein als sie für die Positionsbestimmung der mobilen Einheit angestrebt wird. Es wurde erkannt, dass der Einfluss der Ionosphäre, der die Hauptquelle für die Unsicherheit bei der Positionsbestimmung ist, nicht konstant ist, sondern beispielsweise tageszeitlich schwankt. So ist beispielsweise auf der Nachtseite der Erde der Einfluss der Sonnenaktivität auf die Ionosphäre vermindert, so dass dort die Rekombination von Elektronen mit Ionen in den neutralen Zustand überwiegt. Der Einfluss der Ionosphäre auf die Laufzeiten der Signale von den Satelliten ist dann deutlich geringer als am Tage, wenn auf Baustellen typischerweise gearbeitet wird und die Notwendigkeit besteht, dort mit Hilfe des Navigationssystems Objekte zu lokalisieren. Die Genauigkeit der Referenzstation wird also gleichsam zu einer günstigen Zeit ermittelt, so dass bei der nachfolgenden Arbeit auf der Baustelle darauf zurückgegriffen werden kann.

Selbstverständlich ist die damit erzielbare Genauigkeit geringer als wenn die tatsächliche Position der Referenzstation exakt geodätisch bestimmt wird. Es wurde erkannt, dass mit dieser Vorgehensweise die Genauigkeit jedoch gerade auf einen für die Lokalisierung von Objekten auf Baustellen ausreichenden Bereich von wenigen Metern verbessert werden kann. Die Lösung gemäß der Erfindung stellt also gerade für diese Anwendung ein besonders vorteilhaftes Verhältnis zwischen Aufwand und Genauigkeit zur Verfügung. Dies ist insbesondere vor dem Hintergrund zu sehen, dass Referenzstationen auf Baustellen meistens nur temporär zum Einsatz kommen und im Verlauf des Baufortschritts auch den Standort wechseln müssen. Jeder Standortwechsel macht ein zuvor erfolgtes geodätisches Einmessen ungültig.

Der Begriff "Modul" im Sinne der Erfindung ist als "Funktionseinheit" zu verstehen und ausdrücklich nicht auf ein Hardwaremodul beschränkt. Jedes Modul kann auch ganz oder teilweise in Software implementiert sein.

Um den Zeitraum zu ermitteln, in dem die Elektronendichte in der Ionosphäre vermindert ist, gibt es verschiedene Möglichkeiten, von denen einige besonders einfach und kostengünstig zu realisierende im Folgenden beispielhaft genannt werden.

Beispielsweise kann das Einmessmodul dazu ausgebildet sein, die tatsächliche Position aus einer oder mehreren zur Nachtzeit ermittelten angeblichen Positionen auszuwerten. Dies kann etwa über eine Zeitschaltung gesteuert werden. Die Zeitschaltung kann beispielsweise noch mit einem astronomischen Kalender gekoppelt sein, der die jahreszeitliche Verschiebung von Sonnenaufgang und Sonnenuntergang enthält.

Alternativ oder auch in Kombination kann das Einmessmodul beispielsweise an einen Helligkeitssensor gekoppelt sein. Das Einmessmodul ist dann dazu ausgebildet, bei der Auswertung der tatsächlichen Position aus den angeblichen Positionen die Umgebungshelligkeit zum Zeitpunkt der Bestimmung einer angeblichen Position als Maß für die Intensität der Elektronendichte in der Ionosphäre zum Zeitpunkt der Bestimmung dieser Position zu berücksichtigen.

Die Elektronendichte in der Ionosphäre ist weiterhin maßgeblich für die reflektierende Wirkung der Ionosphäre für Kurzwellensignale. Daher kann das Einmessmodul beispielsweise auch mit einem Funkempfänger für mindestens eine Frequenz zwischen 1 MHz und 100 MHz gekoppelt sein. Das Einmessmodul ist dann dazu ausgebildet, bei der Auswertung der tatsächlichen Position aus den angeblichen Positionen eine von dem Funkempfänger registrierte Signalstärke zum Zeitpunkt der Bestimmung einer angeblichen Position als Maß für die Elektronendichte in der Ionosphäre zum Zeitpunkt der Bestimmung dieser Position zu berücksichtigen. Auf diese Weise können nicht nur tageszeitliche und jahreszeitliche Schwankungen der Elektronendichte in der Ionosphäre berücksichtigt werden, sondern beispielsweise auch Schwankungen in der Sonnenaktivität oder das spontane Auftreten wolkenartiger Gebiete mit hoher Ionisierung, wie beispielsweise eine sogenannte sporadische E-Schicht, welche auch als Sporadic-E bezeichnet wird.

Zu diesem Zweck kann das Einmessmodul beispielsweise auch mit einer Datenschnittstelle gekoppelt sein und dazu ausgebildet sein, Informationen hinsichtlich der Elektronendichte in der Ionosphäre von einer externen Informationsquelle zu beziehen. Hierfür können beispielsweise allgemein verfügbare Daten, wie etwa Beobachtungsdaten des European Geostationary Navigation Overlay Service, EGNOS, genutzt werden.

Der Einfluss der Ionosphäre auf die Positionsbestimmung hängt nicht nur von einem globalen Wert für die Elektronendichte in der Ionosphäre ab, sondern ist auch von der Konstellation der Satelliten des Navigationssystems relativ zur Referenzstation abhängig. Je nach Position der Satelliten trifft die Sichtlinie zwischen der Referenzstation und den Satelliten an anderen Durchdringungspunkten auf die Ionosphäre. Es ist also die Elektronendichte an diesen Durchdringungspunkten maßgeblich für die Änderung der Signallaufzeit. Weiterhin bestimmt die Konstellation der Satelliten auch den Winkel, unter dem die Signale die Ionosphäre durchdringen, und damit die innerhalb der Ionosphäre zurückgelegte Strecke. Aus diesen Gründen ist der Einfluss der Ionosphäre auf die ermittelte angebliche Position auch bei statischen Bedingungen in der Ionosphäre selbst nicht konstant, vielmehr ist der Einfluss der Ionosphäre für jeden beobachteten Satelliten individuell zu berücksichtigen. Daher kann das Einmessmodul beispielsweise auch ein Ausmaß der zeitlichen Schwankungen der angeblichen Positionen als Maß für die Elektronendichte in der Ionosphäre berücksichtigen.

Viele Referenzstationen für DGPS-Systeme werten im Interesse einer maximalen Genauigkeit die Trägerphasen der von den Satelliten empfangenen Signale aus. Es wurde erkannt, dass bei der Referenzstation gemäß der Erfindung die näherungsweise Ermittlung der tatsächlichen Position durch das Einmessmodul der begrenzende Faktor für die erzielbare Genauigkeit der Positionsbestimmung ist. Die Berücksichtigung der Trägerphase kann diese Genauigkeit dann nicht mehr weiter steigern. Daher ist im Interesse einer Ressourcenschonung und Reduzierung der zu übertragenden Datenmenge das Verarbeitungsmodul dazu ausgebildet, die angebliche Position lediglich anhand der Codesequenzen der von den Satelliten empfangenen Signale auszuwerten und die Information der Trägerphase der Signale unberücksichtigt zu lassen.

In einer besonders vorteilhaften Ausgestaltung der Erfindung besitzt das Einmessmodul bzw. die Referenzstation einen Sender bzw. eine Funkschnittstelle, zur Herstellung einer bidirektionalen Funkverbindung für die Kommunikation mit mindestens einer mobilen Einheit, wobei die Referenzstation dazu ausgebildet ist, die durch die mobile Einheit ermittelte eigene Position der mobilen Einheit über die bidirektionale Funkverbindung zu empfangen. Auf diese Weise kann die Referenzstation nicht nur eine oder mehrere mobile Einheiten mit Korrekturbeiträgen versorgen, damit diese mobilen Einheiten dann jeweils ihre eigene Position präziser bestimmen können. Die Referenzstation kann im Gegenzug die Positionsdaten der mobilen Einheiten sammeln und beispielsweise an Ort und Stelle auf der Baustelle anzeigen und/oder an einen externen Server weitergeben. So kann beispielsweise ein Register geführt werden, in dem jeder auf der Baustelle vorhandene und mit einer mobilen Einheit versehene Gegenstand mit aktueller Position verzeichnet ist. Die Verbindung zu dem externen Server kann beispielsweise per TCP/IP oder GSM oder einem anderen Mobilfunkstandard erfolgen.

Somit bezieht sich die Erfindung auch auf ein System zur Lokalisierung mindestens eines Gegenstands auf einer Baustelle. Dieses System umfasst mindestens eine Referenzstation gemäß der Erfindung sowie mindestens eine mit dem Gegenstand verbindbare Markierungsvorrichtung als mobile Einheit. Dabei weist die Markierungsvorrichtung einen eigenen Empfänger für das satellitengestützte Navigationssystem sowie ein dazugehöriges eigenes Verarbeitungsmodul auf. Das Verarbeitungsmodul ist dazu ausgebildet, bei der Ermittlung der eigenen Position der Markierungsvorrichtung die über die bidirektionale Funkverbindung empfangenen Korrekturbeiträge zu berücksichtigen.

In diesem System muss in der mobilen Einheit nur ein Minimum an Datenverarbeitung durchgeführt werden. Dementsprechend verbraucht die mobile Einheit nur sehr wenig Energie und kann beispielsweise mit einer Lebensdauerbatterie ausgestattet sein. Um den Energieverbrauch weiter zu reduzieren, kann die Referenzstation der mobilen Einheit beispielsweise noch Informationen über die Konstellation der Navigationssatelliten mitteilen, so dass vorzugsweise die Signale der Satelliten ausgewertet werden, deren Konstellation für eine präzise Positionsbestimmung besonders vorteilhaft ist (möglichst geringe Dilution of Precision, DOP). Die Referenzstation kann zu diesem Zweck beispielsweise dazu ausgebildet sein, an Hand eines Almanachs oder von Ephemerie-Daten die Positionen der Satelliten am Himmel zu bestimmen. Diese Daten werden von den Satelliten übermittelt und müssen also nicht zwingend über ein Netzwerk von einem externen Server bezogen werden.

Das System kann insbesondere autark arbeiten, d.h., es ist nicht zwingend darauf angewiesen, dass eine Kommunikationsverbindung zu einem externen Server besteht. Wenn eine solche Verbindung besteht, um beispielsweise ermittelte Positionen der mobilen Einheiten weiterzugeben oder Informationen über die Elektronendichte in der Ionosphäre vom Server zu beziehen, dann müssen nur wenige stark verdichtete Daten übertragen werden. Beispielsweise kann gezielt nur die Elektronendichte an den von der Referenzstation ermittelten Durchdringungspunkten vom Server abgerufen werden. Gerade auf Baustellen steht häufig keine verkabelte Netzwerkanbindung zur Verfügung, sondern oftmals nur eine Mobilfunkverbindung, bei der das übertragene Datenvolumen begrenzt und/oder mit Kosten verbunden ist.

Die zu einem ionosphärisch günstigen Zeitpunkt eingemessene tatsächliche Position der Referenzstation ist unabhängig von der aktuellen Konstellation der Satelliten nutzbar. Anhand der im Speicher hinterlegten tatsächlichen Position kann die Referenzstation zu jedem Zeitpunkt immer für diejenigen Satelliten, die gerade sichtbar sind, Korrekturbeiträge ermitteln. Dann fallen nur bezüglich dieser Satelliten auch Daten an, die über die bidirektionale Funkverbindung zu den Markierungsvorrichtungen zu übertragen sind. Die zu übertragende Datenmenge kann somit auf ein Minimum reduziert werden. Dies wiederum ist von Vorteil, da insbesondere auf kostenfrei nutzbaren Frequenzen für Short Range Devices die Bandbreite, und/oder die zeitliche Belegungsdauer (duty cycle), regulatorisch begrenzt ist.

Vorteilhaft ist die bidirektionale Funkverbindung so ausgebildet, dass die Markierungsvorrichtung auf der Sendefrequenz der Referenzstation empfängt und die Referenzstation auf der Sendefrequenz der Markierungsvorrichtung empfängt. Beispielsweise kann die Referenzstation ein Knoten in einem Netz nach dem LoRa®-Standard für die Kommunikation im "Internet of Things", IoT, sein, und die Markierungsvorrichtungen können an diesen Knoten angebunden sein. Die Knoten können untereinander vernetzt sein. Einer oder mehrere der Knoten in einem LoRa®-Netz können auch eine Verbindung zum Internet bereitstellen. Die Referenzstation kann also auch beispielsweise als Gateway zur Verbindung der Markierungsvorrichtungen in dem LoRa®-Netz mit anderen Netzen ausgebildet sein.

Das selbständige Einmessen der tatsächlichen Position der Referenzstation zu einer ionosphärisch günstigen Zeit erfordert im Idealfall keine oder nur geringfügige hardwaremäßige Änderungen an einer bestehenden Referenzstation. Vielmehr lässt sich diese Funktionalität im Wesentlichen oder auch vollständig allein durch eine optimierte Betriebsweise nachrüsten.

Daher bezieht sich die Erfindung allgemein auch auf ein Verfahren zum Betreiben einer Referenzstation für ein satellitengestütztes Navigationssystem, wobei mit einem Empfänger der Referenzstation von Satelliten des Navigationssystems ausgesendete Signale empfangen und zu einer angeblichen Position der Referenzstation ausgewertet werden und wobei aus dem Vergleich der angeblichen Position mit der tatsächlichen Position der Referenzstation Korrekturbeiträge ermittelt werden, die den Einfluss der Ionosphäre auf die Laufzeit der Signale beschreiben.

Erfindungsgemäß wird in einem Einmesszeitraum, in dem die Intensität der Elektronendichte in der Ionosphäre vermindert ist, mindestens eine angebliche Position der Referenzstation ermittelt. Hieraus wird die tatsächliche Position der Referenzstation ausgewertet.

Nach dem zuvor Beschriebenen wird vorteilhaft ein Zeitraum während der Nachtzeit und/oder ein Zeitraum verminderter Sonnenaktivität als Einmesszeitraum gewählt. Insbesondere die Wahl eines Zeitraums während der Nachtzeit kann vollständig mit bestehender Hardware erfolgen, da das aktuelle Datum und die aktuelle Uhrzeit von den Satelliten des Navigationssystems empfangen werden.

Die Nachrüstung der Funktionalität gemäß der Erfindung an einer bestehenden Referenzstation kann insbesondere ganz oder teilweise mittels Software erfolgen, die insofern ein eigenständig verkaufsfähiges Produkt darstellt. Daher bezieht sich die Erfindung auch auf ein Computerprogrammprodukt mit maschinenlesbaren Anweisungen, die, wenn sie auf einem Computer, und/oder einer Referenzstation für ein satellitengestütztes Navigationssystem, ausgeführt werden, den Computer, und/oder die Referenzstation, zu einer Referenzstation gemäß der Erfindung aufwerten, und/oder dazu veranlassen, ein Verfahren gemäß der Erfindung auszuführen

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel einer Referenzstation 1 gemäß der Erfindung;
- Figur 2: Ausführungsbeispiel eines Systems 6 gemäß der Erfindung;
- Figur 3: Ausführungsbeispiel des Verfahrens 100 gemäß der Erfindung.

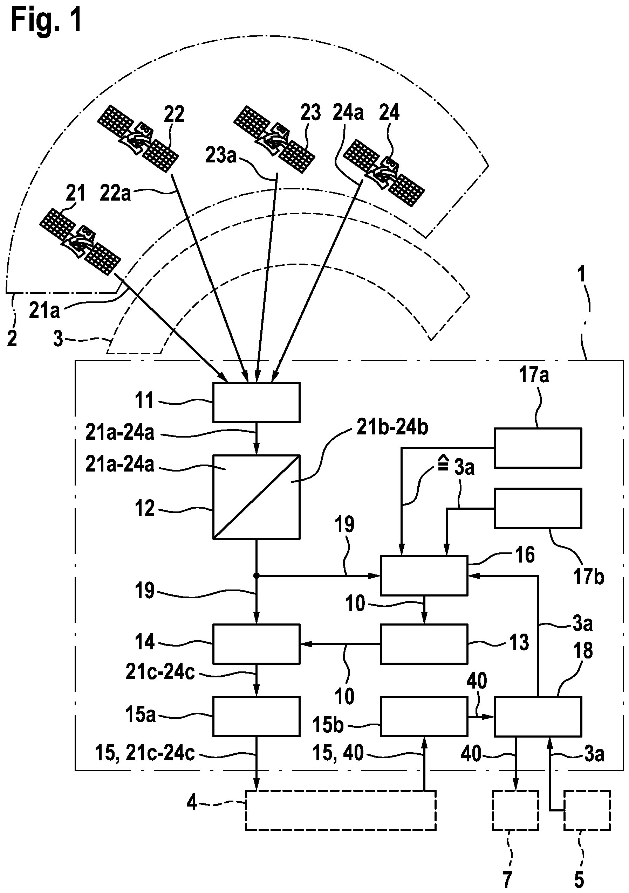

Nach Figur 1 enthält die Referenzstation 1 einen Empfänger 11 für Signale 21a-24a, die von Satelliten 21-24 eines oder mehrerer Navigationssysteme 2 ausgesendet werden. Das Verarbeitungsmodul 12 wertet aus den Signalen 21a-24a die jeweiligen Laufzeiten 21b-24b vom Satelliten 21-24 bis zum Empfänger 11 aus und bestimmt daraus die angebliche Position 19 der Referenzstation 1.

Diese angebliche Position 19 wird dadurch verfälscht, dass die Signale 21a-24a die Ionosphäre 3 der Erde passieren müssen und auf dem Weg zum Empfänger 11 unterschiedliche Verlängerungen ihrer Laufzeiten 21b-24b erfahren. Daher wird in der Vergleichseinheit 14 die angebliche Position 19 mit der im Speicher 13 hinterlegten tatsächlichen Position 10 der Referenzstation 10 verglichen. Aus der Abweichung werden die Korrekturbeiträge 21c-24c ermittelt, die den Einfluss der Ionosphäre 3 auf die Laufzeiten 21b-24b der Signale 21a-24a beschreiben.

Die Korrekturbeiträge 21c-24c werden über einen Sender 15a an die in Figur 1 nicht weiter detaillierte mobile Einheit 4 übermittelt. Im Gegenzug erhält die Referenzstation über einen Empfänger 15b die Position 40 der mobilen Einheit 4, die von der mobilen Einheit 4 selbst ermittelt wurde. Der Sender 15a und der Empfänger 15b sind also Teil einer Funkschnittstelle, die eine bidirektionale Funkverbindung 15 zwischen der Referenzstation 1 und der mobilen Einheit 4 herstellt. Die Position 40 der mobilen Einheit 4 wird über die Datenschnittstelle 18 an einen externen Server 7 weitergeleitet.

Die Referenzstation 1 weist ein Einmessmodul 16 auf. Das Einmessmodul 16 wertet in einem Zeitraum, in dem die Elektronendichte 3a der Ionosphäre 3 vermindert ist, aus angeblichen Positionen 19 die tatsächliche Position 10 der Referenzstation 1 und legt sie in dem Speicher 13 ab.

Das Einmessmodul 16 kann die Entscheidung, wann die Elektronendichte 3a der Ionosphäre 3 niedrig ist, beispielsweise Tageszeit und Jahreszeit heranziehen. In dem in Figur 1 gezeigten Ausführungsbeispiel können zusätzlich ein Helligkeitssensor 17a und/oder ein Kurzwellen-Funkempfänger 17b vorgesehen werden. Die vom Helligkeitssensor 17a registrierte Helligkeit, bzw. die vom Funkempfänger 17b registrierte Signalstärke, wird jeweils als Maß für die Sonnenaktivität und damit als Maß für die Intensität der Elektronendichte 3a der Ionosphäre 3 herangezogen. Zusätzlich kann das Einmessmodul 16 auch von einer externen Datenquelle 5 Informationen über die Elektronendichte 3a der Ionosphäre 3 erhalten.

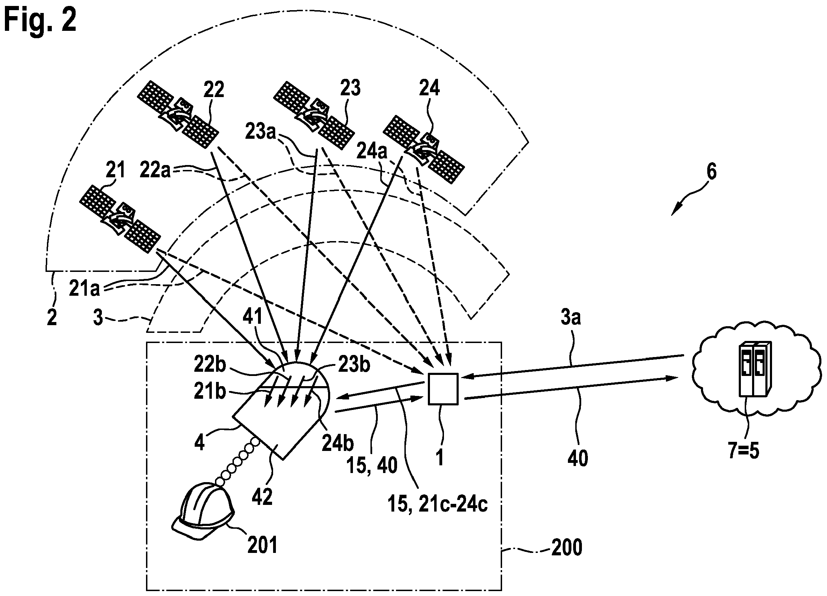

Das in Figur 2 gezeigte System 6 enthält neben der Referenzstation 1 noch Markierungsvorrichtungen 4 als mobile Einheiten, die mit zu lokalisierenden Objekten 201 verbindbar sind. Das System 6 dient dazu, die Objekte 201 auf einer Baustelle 200 aufzufinden.

Die Markierungsvorrichtung 4 weist einen Empfänger 41 für die gleichen von den Satelliten 21-24 ausgesendeten Signale 21a-24a auf, wie sie auch zeitgleich von der Referenzstation 1 ausgewertet werden. Im Verarbeitungsmodul 42 der Markierungsvorrichtung 4 werden die Laufzeiten 21b-24b der Signale 21a-24a ausgewertet und um die über die bidirektionale Funkverbindung 15 bezogenen Korrekturbeiträge 21c-24c korrigiert. Die vom Verarbeitungsmodul 42 ermittelte Position 40 der Markierungsvorrichtung 4 wird über die bidirektionale Funkverbindung 15 an die Referenzstation 1 zurückgespielt.

Der Server 7, der von der Referenzstation 1 die Position 40 der Markierungsvorrichtung 4 erhält, fungiert in dem in Figur 2 gezeigten Ausführungsbeispiel zugleich als Datenquelle 5, die der Referenzstation 1 Informationen über die Elektronendichte 3a der Ionosphäre 3 zur Verfügung stellt.

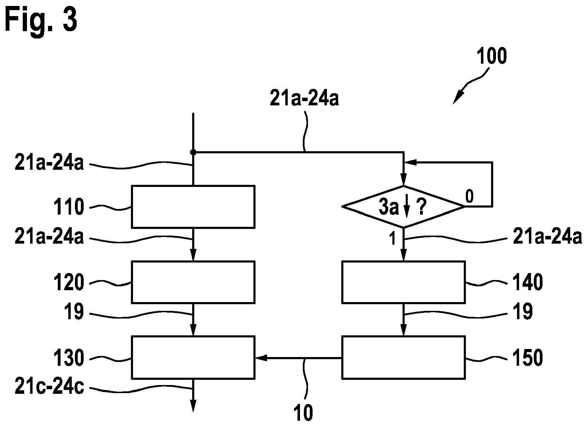

Figur 3 zeigt ein Ausführungsbeispiel des Verfahrens 100 gemäß der Erfindung. Die von den Satelliten 21-24 ausgesendeten Signale 21a-24a werden in Schritt 110 empfangen und in Schritt 120 zur angeblichen Position 19 der Referenzstation 1 ausgewertet. In Schritt 130 werden aus dem Vergleich der angeblichen Position 19 mit der tatsächlichen Position 10 der Referenzstation 1 die Korrekturbeiträge 21c-24c ausgewertet.

Zum Einmessen der tatsächlichen Position 10 wird geprüft ("3a↓"), ob die aktuelle Elektronendichte 3a der Ionosphäre 3 niedrig ist. Ist dies nicht der Fall (Wahrheitswert 0), wird die Prüfung (sofort oder nach einem vorbestimmten Intervall) wiederholt. Ist die Elektronendichte niedrig (Wahrheitswert 1), wird in Schritt 140 aus den Signalen 21a-24a mindestens eine angebliche Position 19 der Referenzstation 1 ermittelt. In Schritt 150 wird hieraus die tatsächliche Position 10 der Referenzstation 1 ermittelt.

## Patentansprüche

1. Referenzstation (1) für ein satellitengestütztes Navigationssystem (2), umfassend mindestens einen Empfänger (11) für von Satelliten (21-24) des Navigationssystems (2) ausgesendete Signale (21a-24a), ein Verarbeitungsmodul (12) zur Auswertung einer angeblichen Position (19) der Referenzstation (1) aus den empfangenen Signalen (21a-24a), einen Speicher (13) für die tatsächliche Position (10) der Referenzstation (1), eine Vergleichseinheit (14), die dazu ausgebildet ist, aus der Differenz zwischen der angeblichen Position (19) und der tatsächlichen Position (10) der Referenzstation (1) Korrekturbeiträge (21c-24c) zu ermitteln, die mindestens den Einfluss der Ionosphäre (3) auf die Laufzeit (21b-24b) der Signale (21a-24a) zu beschreiben, sowie einen Sender (15a) zur Übermittlung der Korrekturbeiträge (21c-24c) an mindestens eine mobile Einheit (4), **dadurch gekennzeichnet, dass** die Referenzstation (1) ein Einmessmodul (16) aufweist, das dazu ausgebildet ist, in einem Einmesszeitraum, in dem die Elektronendichte (3a) in der Ionosphäre (3) vermindert ist, aus einer oder mehreren angeblichen Positionen (19) die tatsächliche Position (10) der Referenzstation (1) auszuwerten und in dem Speicher (13) abzulegen.

2. Referenzstation (1) nach Anspruch 1, **dadurch gekennzeichnet, dass** das Einmessmodul (16) dazu ausgebildet ist, die tatsächliche Position (10) aus einer oder mehreren zur Nachtzeit ermittelten angeblichen Positionen (19) auszuwerten.

3. Referenzstation (1) nach Anspruch 1 bis 2, **dadurch gekennzeichnet, dass** das Einmessmodul (16) dazu ausgebildet ist, die tatsächliche Position (10) aus einer oder mehreren angeblichen Positionen (19) auszuwerten, welche während Zeiten mit geringer Sonnenaktivität und/oder geringer Elektronendichte der Ionosphäre (3) ermittelt wurde.

4. Referenzstation (1) nach einem der Ansprüche 1 bis 3, **dadurch gekennzeichnet, dass** ein Helligkeitssensor (17a) für die Umgebungshelligkeit mit dem Einmessmodul (16) gekoppelt ist, wobei das Einmessmodul (16) dazu ausgebildet ist, bei der Auswertung der tatsächlichen Position (10) aus den angeblichen Positionen (19) die Umgebungshelligkeit zum Zeitpunkt der Bestimmung einer angeblichen Position (19) als Maß für die Intensität der Elektronendichte (3a) in der Ionosphäre (3) zum Zeitpunkt der Bestimmung dieser Position (19) zu berücksichtigen.

5. Referenzstation (1) nach einem der Ansprüche 1 bis 4, **dadurch gekennzeichnet, dass** ein Funkempfänger (17b) für mindestens eine Frequenz zwischen 1 MHz und 100 MHz mit dem Einmessmodul (16) gekoppelt ist, wobei das Einmessmodul (16) dazu ausgebildet ist, bei der Auswertung der tatsächlichen Position (10) aus den angeblichen Positionen (19) eine von dem Funkempfänger (17b) registrierte Signalstärke zum Zeitpunkt der Bestimmung einer angeblichen Position (19) als Maß für die Elektronendichte (3a) in der Ionosphäre (3) zum Zeitpunkt der Bestimmung dieser Position (19) zu berücksichtigen.

6. Referenzstation (1) nach einem der Ansprüche 1 bis 5, **dadurch gekennzeichnet, dass** das Einmessmodul (16) mit einer Datenschnittstelle (18) gekoppelt ist, wobei das Einmessmodul (16) dazu ausgebildet ist, Informationen hinsichtlich der Elektronendichte (3a) in der Ionosphäre (3) von einer externen Informationsquelle (5) zu beziehen.

7. Referenzstation (1) nach einem der Ansprüche 1 bis 6, **dadurch gekennzeichnet, dass** das Einmessmodul (16) dazu ausgebildet ist, ein Ausmaß der zeitlichen Schwankungen der angeblichen Positionen (19) als Maß für die Elektronendichte (3a) in der Ionosphäre (3) zu berücksichtigen.

8. Referenzstation (1) nach einem der Ansprüche 1 bis 7, **dadurch gekennzeichnet, dass** das Verarbeitungsmodul (12) dazu ausgebildet ist, die angebliche Position (19) lediglich anhand der Codesequenzen der von den Satelliten (21-24) empfangenen Signale (21a-24a) auszuwerten und die Trägerphase der Signale (21a-24a) unberücksichtigt zu lassen.

9. Referenzstation (1) nach einem der Ansprüche 1 bis 8, **dadurch gekennzeichnet, dass** der Sender (15a) Teil einer Funkschnittstelle zur Herstellung einer bidirektionalen Funkverbindung (15) für die Kommunikation mit der mindestens einen mobilen Einheit (4) ist, wobei die Referenzstation (1) dazu ausgebildet ist, die durch die mobile Einheit (4) ermittelte eigene Position (40) der mobilen Einheit (4) über die bidirektionale Funkverbindung (15) zu empfangen.

10. System (6) zur Lokalisierung mindestens eines Gegenstands (201), umfassend mindestens eine Referenzstation (1) nach Anspruch 9 sowie mindestens eine mit dem Gegenstand (201) verbindbare Markierungsvorrichtung (4) als mobile Einheit, wobei die Markierungsvorrichtung (4) einen eigenen Empfänger (41) für das satellitengestützte Navigationssystem (2) sowie ein eigenes Verarbeitungsmodul (42) aufweist, wobei das Verarbeitungsmodul (42) dazu ausgebildet ist, bei der Ermittlung der eigenen Position (40) der Markierungsvorrichtung (4) die über die bidirektionale Funkverbindung (15) empfangenen Korrekturbeiträge (21c-24c) zu berücksichtigen.

11. System (6) nach Anspruch 10, **dadurch gekennzeichnet, dass** die bidirektionale Funkverbindung (15) so ausgebildet ist, dass die Markierungsvorrichtung (4) auf der Sendefrequenz der Referenzstation (1) empfängt und die Referenzstation (1) auf der Sendefrequenz der Markierungsvorrichtung (4) empfängt.

12. Verfahren (100) zum Betreiben einer Referenzstation (1) für ein satellitengestütztes Navigationssystem (2), wobei mit einem Empfänger (11) der Referenzstation (1) von Satelliten (21-24) des Navigationssystems (2) ausgesendete Signale (21a-24a) empfangen (110) und zu einer angeblichen Position (19) der Referenzstation (1) ausgewertet (120) werden und wobei aus dem Vergleich der angeblichen Position (19) mit der tatsächlichen Position (10) der Referenzstation (1) Korrekturbeiträge (21c-24c) ermittelt (130) werden, die den Einfluss der Ionosphäre (3) auf die Laufzeit (21b-24b) der Signale (21c-24c) beschreiben, **dadurch gekennzeichnet, dass** in einem Einmesszeitraum, in dem die Elektronendichte (3a) in der Ionosphäre (3) vermindert ist, mindestens eine angebliche Position (19) der Referenzstation (1) ermittelt (140) und hieraus die tatsächliche Position (10) der Referenzstation ausgewertet (150) wird.

13. Verfahren (100) nach Anspruch 12, **dadurch gekennzeichnet, dass** ein Zeitraum während der Nachtzeit, ein Zeitraum verminderter Umgebungshelligkeit, und/oder ein Zeitraum verminderter Funkaktivität auf mindestens einer Frequenz zwischen 1 MHz und 100 MHz als Einmesszeitraum gewählt wird.

14. Computerprogrammprodukt, enthaltend maschinenlesbare Anweisungen, die, wenn sie auf einem Computer, und/oder einer Referenzstation (1) für ein satellitengestütztes Navigationssystem (2), ausgeführt werden, den Computer, und/oder die Referenzstation (1), zu einer Referenzstation (1) nach einem der Ansprüche 1 bis 8 aufwerten, und/oder dazu veranlassen, ein Verfahren (100) nach einem der Ansprüche 11 bis 12 auszuführen.
